## Europäisches Patentamt

## European Patent Office

## Office européen des brevets

(19)

(11) Numéro de publication: **0 075 518**
**B1**

(12) **FASCICULE DE BREVET EUROPEEN**

(45) Date de publication du fascicule du brevet: **20.11.86**

(51) Int. Cl.⁴: **B 62 D 5/10, B 62 D 5/06**

(21) Numéro de dépôt: **82401710.7**

(22) Date de dépôt: **21.09.82**

(54) **Mécanisme d'actionnement à assistance par fluide notamment pour système de servo-direction.**

(30) Priorité: **23.09.81 ES 506438**

(43) Date de publication de la demande:
**30.03.83 Bulletin 83/13**

(45) Mention de la délivrance du brevet:
**20.11.86 Bulletin 86/47**

(84) Etats contractants désignés:
**DE FR GB IT**

(56) Documents cités:
**GB-A-1 576 153**
**US-A-2 451 689**
**US-A-3 044 569**
**US-A-3 876 030**
**US-A-3 916 730**

(73) Titulaire: **BENDIX ESPANA S.A.**
**Balmes 243**
**Barcelona 6 (ES)**

(72) Inventeur: **Bacardit, Juan Simon**
**Calle Mallorca 451**
**Barcelona 13 (ES)**

(74) Mandataire: **Le Moenner, Gabriel et al**
**SERVICE BREVETS BENDIX 44, Rue François 1er**
**F-75008 Paris (FR)**

Courier Press, Leamington Spa, England.

EP 0 075 518 B1

## Description

La présente invention concerne les mécanismes d'actionnement à assistance par fluide, plus particulièrement pour systèmes de servodirection de véhicules automobiles, du type comprenant, dans un boîtier, un distributeur hydraulique comportant un organe rotatif primaire, destiné à être relié à un système de commande et un organe rotatif secondaire couplé à l'organe rotatif primaire par un accouplement à course morte, le distributeur utilisant cette course morte pour alimenter sélectivement les chambres d'au moins un moteur à fluide d'assistance à double effet, et une transmission multiplicatrice d'effort entre l'organe rotatif secondaire et un organe de sortie rotatif du mécanisme.

Un mécanisme d'actionnement de ce type est décrit dans le document GB—A—1 576 153 au nom de la demanderesse, dont le contenu est supposé intégré ici pour référence.

La nature de la transmission multiplicatrice d'effort est déterminée en règle générale par les caractéristiques de construction de l'ensemble mécanique auquel on incorpore ce mécanisme d'actionnement en question. Ainsi par exemple, dans le cas des servo-directions pour automobiles, cette transmission prend généralement la forme d'un dispositif à vis et écrou relié à l'organe de sortie rotatif par l'intermédiaire d'un engrenage de type quelconque. Dans tous les cas, la position et l'orientation de l'organe de sortie rotatif du mécanisme diffèrent de celles de l'organe d'entrée ou organe rotatif primaire qui reçoit l'actionnement de commande, ainsi qu'il convient dans la majorité des cas. Il existe toutefois une demande pour des mécanismes d'actionnement où l'organe de sortie du mécanisme soit coaxial à l'organe d'entrée, par exemple lorsque l'on veut intégrer un servo-mécanisme de ce genre dans une colonne de direction non assistée pré-existante d'un véhicule automobile.

La présente invention a précisément pour objet de combler cette lacune et de proposer un mécanisme d'actionnement à assistance par fluide du type décrit plus haut, de conception particulièrement compacte avec un organe de sortie rotatif coaxial à l'organe d'entrée, et assurant en même temps l'assistance et l'amplification de l'effort.

Pour ce faire, selon l'invention, l'organe primaire et l'organe de sortie sont coaxiaux et la transmission multiplicatrice d'effort est constituée d'un train d'engrenages épicycloïdal coaxial incluant un pignon planétaire solidaire de l'organe secondaire du distributeur et au moins un satellite porté par un bras transversal solidaire de l'organe de sortie, le moteur d'assistance comprenant un rotor à palettes, également coaxial, relié à l'organe de sortie et tournant dans une cavité formée dans le boîtier.

Avec un tel agencement, conformément à l'objet de l'invention, l'essentiel des éléments du mécanisme — y compris le moteur d'assistance-sont aménagés coaxiaux à l'axe principal unique de rotation du mécanisme.

Le document US—A—3,916,730 décrit un mécanisme d'assistance où le distributeur hydraulique est disposé dans le piston d'assistance formant crémaillère d'entraînement de l'organe rotatif de sortie du mécanisme. L'arbre d'entrée du mécanisme est divisé en deux tronçons, sélectivement couplables l'un à l'autre par un train d'engrenages épicycloïdal sous la commande d'embrayages pilotés par pression de fluide.

Selon un aspect de l'invention, l'organe secondaire du distributeur s'étend dans un évidement axial de l'organe ou arbre de sortie du mécanisme, et le rotor à palettes du moteur est disposé pour entourer partiellement le distributeur.

De cette façon, on aboutit à un encombrement axial particulièrement ramassé de l'ensemble du mécanisme.

D'autres caractéristiques et avantages de l'invention ressortiront de la description suivante d'un mode de réalisation, donné à titre illustratif et nullement limitatif, faite en relation avec les dessins annexés sur lesquels:

— La figure 1 est une coupe axiale d'un mécanisme d'actionnement conforme à l'invention;

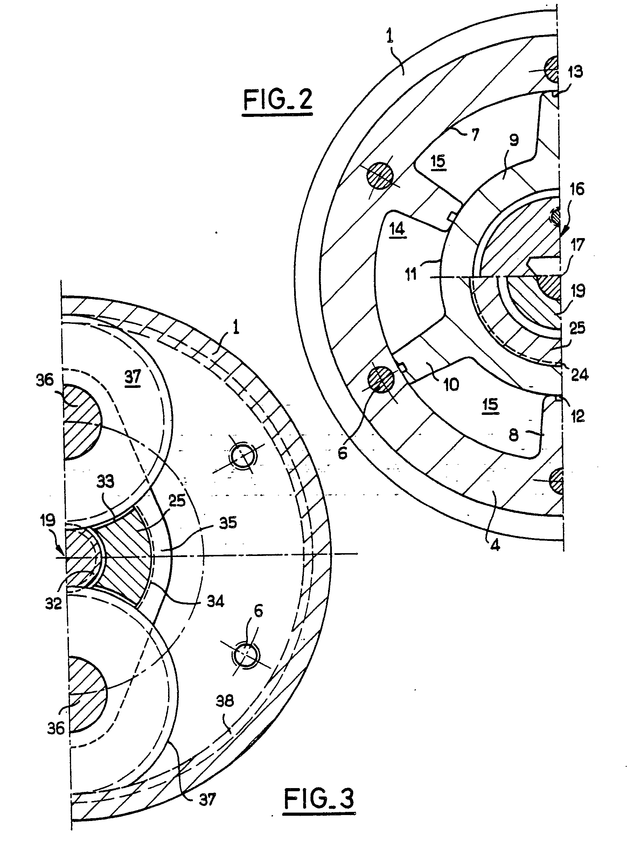

— La figure 2 est une demi-coupe transversale selon la ligne II—II de la figure 1; et

— La figure 3 est une demi-coupe transversale selon la ligne III—III de la figure 1.

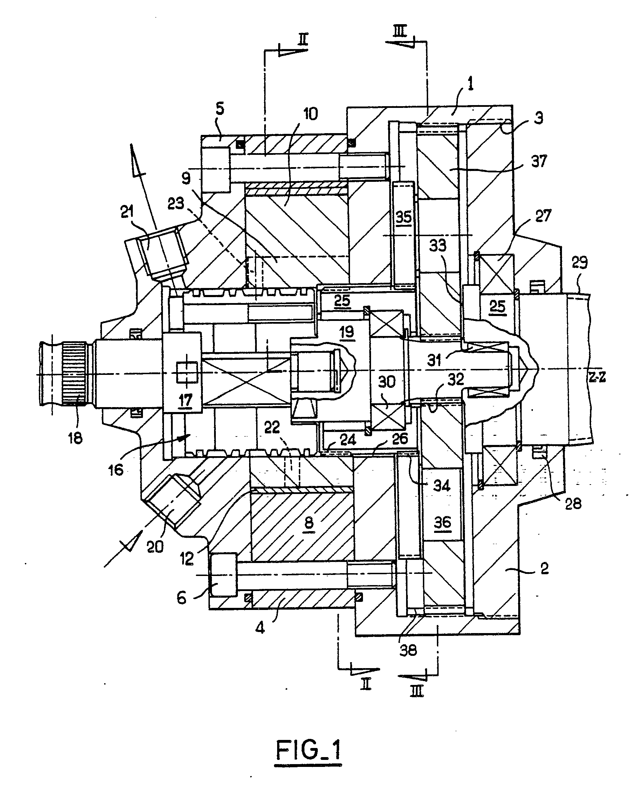

Comme on peut voir sur la figure 1, le mécanisme selon l'invention comprend essentiellement un empilage coaxial d'un corps de mécanisme réducteur 1 ayant la forme d'une cuvette fermée par un couvercle 2 vissé en 3 et d'un corps annulaire de mécanisme d'actionnement 4 fermé par un couvercle 5, tous deux fixés sur le corps 1 à l'aide des vis 6 traversant le corps 4.

Le corps annulaire du mécanisme d'actionnement 4 présente une surface intérieure cylindrique 7 interrompue, dans l'exemple représenté, par trois cloisons 8 s'étendant radialement vers l'intérieur et longitudinalement sur toute l'extension axiale du corps de manière à former trois enceintes identiques. A l'intérieur de ce corps 4 est monté à rotation un rotor d'actionnement 9 de même extension axiale et pourvu de trois ailettes 10 s'étendant radialement vers l'extérieur et de même extension axiale que le rotor, lequel présente une surface cylindrique périphérique extérieure 11 entre les ailettes 10. Les bords intérieurs des cloisons 8 et les bords extérieurs des ailettes 10 sont munis respectivement de joints 12 et 13 qui s'adaptent respectivement sur les surfaces cylindriques 11 et 7 du rotor 9 et du corps 4. D'autre part, les faces axiales opposées du rotor 9 et du corps 4 du mécanisme d'actionnement s'ajustent hermétiquement, de façon connue en soi, par exemple par des joints statiques et coulissant, sur les faces axiales en regard du corps de réducteur 1 et du couvercle du mécanisme d'actionnement 5 de manière à former, entre les ailettes mobiles 10 et les cloisons fixes 8, deux séries de chambres de travail 14 et 15 isolées hermétiquement les unes des autres.

Le couvercle 5 et le rotor 9 sont usinés coaxialement intérieurement de façon à former un alésage continu formant logement pour le stator d'un distributeur à fluide désigné par la référence générale 16 qui peut être constitué par n'importe quel type de distributeur hydraulique rotatif connu et compatible, par exemple un distributeur à chemise et rotor à rainures coaxiaux, comme représenté, ou un distributeur compact en étoile tel que décrit par exemple dans le brevet britannique 1 576 153 au nom de la demanderesse, dont le contenu est supposé intégré ici pour référence, et comportant, dans tous les cas, un organe primaire ou d'entrée 17 faisant saillie vers l'extérieur hors du couvercle 5 et servant d'accouplement récepteur 18 par exemple de la colonne de transmission provenant du volant de direction d'un véhicule, et un organe secondaire ou de sortie 19, tous deux reliés mutuellement par l'intermédiaire d'un accouplement mécanique à course morte afin que le mouvement relatif entre ces deux organes 17 et 19 soit utilisé pour actionner en rotation le rotor (tubulaire ou étoilé) du distributeur par rapport au stator de distributeur relié à l'organe secondaire 19 afin d'alimenter sélectivement et alternativement en fluide de travail sous pression, circulant entre une entrée 20 et une sortie 21 de fluide du distributeur, les chambres de travail respectives 14, 15 du moteur d'assistance 4, via des conduits de distribution représentés schématiquement en 22, 23 (Fig. 1).

L'extrémité du rotor 9 du moteur opposée au couvercle 5 est reliée en rotation par un accouplement de forme (24) à l'extrémité intérieure d'un arbre désigné par la référence générale 25 qui constitue l'organe de sortie rotatif de la transmission multiplicatrice d'effort constituée par le groupe réducteur 1. L'arbre 25 est introduit par un alésage axial 26 aménagé dans le corps de réducteur 1 et est monté à rotation dans le couvercle 2 par un roulement 27 et une bague de retenue 28, l'arbre 25 se prolongeant au-delà du couvercle 2 de manière à constituer un organe de couplage d'extrémité 29 susceptible d'être relié par exemple à une tringlerie de direction de véhicule.

Comme on peut le voir sur les dessins, l'organe secondaire 19 du distributeur hydraulique 16 se prolonge dans la direction opposée à l'organe primaire 17 à l'intérieur d'une cavité coaxiale aménagée dans la partie d'extrémité intérieure de l'arbre de sortie 25, dans laquelle il est monté tourillonnant au moyen de deux roulements 30, 31 entre lesquels est ménagé un pignon planétaire 32 formé par l'organe secondaire 19.

L'arbre de sortie rotatif 25 est muni, à l'aplomb du pignon planétaire 32, de deux fenêtres ou évidements en creux radiaux diamétralement opposés 33 et supporte, près de l'un des bords transversaux de ces fenêtres (intérieur en l'occurence), par l'intermédiaire d'un accouplement de forme 34, un croisillon transversal 35 constitué par deux bras symétriques par rapport à l'axe Z—Z de l'ensemble du mécanisme. Chacun de ces bras forme un axe en saillie 36 parallèle à l'axe Z—Z sur lequel tourillonne librement un pignon satellite 37 engrénant d'une part, intérieurement, sur le pignon planétaire 32 et d'autre part, extérieurement, sur une couronne dentée 38 formée sur la surface périphérique intérieure du corps 1. Avantageusement, les engrenages du train epicycloïdal sont à denture droite.

On notera que tous les organes décrits, à l'exception des pignons satellites 37 (disposés cependant de façon symétrique), sont coaxiaux à l'axe Z—Z de l'ensemble du mécanisme et que la disposition particulière de certains éléments dans les autres permet d'aboutir à une dimension axiale très réduite, notamment en utilisant un distributeur rotatif en étoile.

Le fonctionnement de ce mécanisme d'actionnement est le suivant:

Sans assistance par fluide ou hydraulique, l'actionnement manuel reçu en 18 par l'organe primaire 17 du distributeur 16 se transmettra directement, par l'intermédiaire de l'accouplement interne à course morte sus-mentionné, à l'organe secondaire 19 du distributeur, qui fera ainsi tourner le pignon soleil 32 dans la cavité étanche du groupe réducteur 1. La rotation de ce pigon 32 met en rotation les pignons satellites 37 autour de leurs axes 36 pour les amener à décrire la couronne dentée 38 de manière à ce que le croisillon 35 soit entraîné en rotation et, avec celui-ci, l'arbre de sortie 25 du réducteur 1. Le mécanisme d'assistance à fluide 4, inactif, recevra sur son rotor à palettes 9 l'entraînement de l'arbre de sortie 25, et les palettes 10 de ce rotor 9 se déplaceront sans aucun effet entre les cloisons fixes 8 du corps annulaire 4.

Par contre, normalement, avec assistance hydraulique, c'est-à-dire lorsque le fluide sous pression arrive par le conduit 20 (pour retourner à la bâche par le conduit 21), l'importance de la course morte existant entre les organes primaire 17 et secondaire 19 du distributeur fait que ce dernier raccorde en conséquence sélectivement les chambres 14 et 15 aux conduits 20 et 21 pour les alimenter en fluide sous pression afin d'établir une pression différentielle entre les chambres 14 et 15, le rotor 9 étant de ce fait entraîné dans le sens correspondant et actionnant l'arbre de sortie 25 auquel il est solidarisé. Le croisillon 35 fixé à ce dernier fait tourner les pignons satellites 37 sur la couronne dentée 38 de manière à communiquer une rotation multipliée au pignon planétaire 32, lequel, par l'intermédiaire de l'organe secondaire 19 du distributeur hydraulique dont il est solidaire, déplace le stator de ce dernier pour rechercher une position d'équilibre en fonction de la nouvelle position angulaire atteinte par l'organe primaire 17 du distributeur par suite de la manoeuvre appliquée sur ce dernier.

Lorsque l'organe primaire 17 du distributeur (formant l'organe d'entrée de l'ensemble du mécanisme) revient en position initiale de repos, les mêmes opérations se reproduisent, mais en sens contraire.

Lorsque l'organe primaire 17 est actionné manuellement en sens contraire, il se produit un fonctionnement en tous points symétrique à celui décrit ci-dessus.

**Revendications**

1. Mécanisme d'actionnement à assistance par fluide, comprenant, dans un boîtier (4), un distributeur hydraulique (16) comportant un organe rotatif primaire (17), destiné à être relié à un système de commande, et un organe rotatif secondaire (19) couplé à l'organe rotatif primaire par un accouplement à course morte, le distributeur utilisant cette course morte pour alimenter sélectivement les chambres (14, 15) d'au moins un moteur à fluide d'assistance à double effet, et une transmission multiplicatrice d'effort entre l'organe rotatif secondaire (19) et un organe de sortie rotatif (25) du mécanisme, caractérisé en ce que l'organe primaire (17) et l'organe de sortie (25) sont coaxiaux et en ce que la transmission multiplicatrice d'effort est constituée d'un train d'engrenages épicycloïdal (32, 37, 38) coaxial incluant un pignon planétaire (32) solidaire de l'organe secondaire (19) du distributeur et au moins un satellite (37) porté par un bras transversal (35) solidaire de l'organe de sortie (25), le moteur d'assistance comprenant un rotor (9) à palettes (10), également coaxial, relié à l'organe de sortie (25) et tournant dans une cavité (7) formée dans le boîtier (4).

2. Mécanisme selon la revendication 1, caractérisé en ce que l'organe secondaire (19) du distributeur (16) s'étend dans un évidement axial formé dans l'organe de sortie (25) du mécanisme.

3. Mécanisme selon la revendication 2, caractérisé en ce que le satellite (37) s'étend dans une ouverture radiale (33) de l'organe de sortie (25) pour engrener avec le pignon planétaire (32) formé sur la partie de l'organe secondaire (19) du distributeur (16) s'étendant dans ledit évidement.

4. Mécanisme selon l'une des revendications précédentes, dans lequel l'organe secondaire (19) du distributeur est relié à un stator de distributeur entourant un rotor de distributeur, caractérisé en ce que le stator de distributeur est partiellement reçu dans un alésage coaxial du rotor (9) à palettes (10).

5. Mécanisme selon l'une des revendications précédentes, caractérisé en ce que le satellite (37) coopère en engrènement avec une couronne dentée périphérique (38) formée sur la face interne du boîtier (1) du mécanisme.

6. Mécanisme selon la revendication 5, caractérisé en ce que l'organe de sortie (25) du mécanisme tourillonne dans un couvercle (2) du boîtier (1).

7. Mécanisme selon l'une des revendications précédentes, caractérisé en ce que la cavité (7) dans laquelle tourne le rotor (9) à palettes (10) comporte des cloisons radiales (8) coopérant en contact étanche avec le moyeu du rotor (9).

8. Mécanisme selon l'une des revendications précédentes, caractérisé en ce que les engrenages (32, 37, 38) du train épicycloïdal sont à denture droite.

**Patentansprüche**

1. Strömungsmittelservomechanismus mit einem in einem Gehäuse (4) angeordneten hydraulischen Verteiler (16), der ein erstes Drehglied (17) und ein zweites Drehglied (19) aufweist, von denen das erste Drehglied mit einer Steueranlage verbindbar ist und das zweite Drehglied durch eine Totgangverbindung mit dem ersten Drehglied verbindbar ist, wobei der Verteiler diesen Totgang dazu benutzt, die Kammern (14, 15) mindestens eines doppelt wirkenden Strömungsmittelservomotors wahlweise zu beaufschlagen, und einem kraftvervielfachenden Getriebe zwischen dem zweiten Drehglied (19) und einem drehbaren Ausgangsglied (25) des Mechanismus, dadurch gekennzeichnet, daß das erste Drehglied (17) und das Ausgangsglied (25) koaxial sind und daß das kraftvervielfachende Getriebe von einem koaxialen Epizykloiden-Zahnradgetriebe (32, 37, 38) gebildet wird, das ein mit dem zweiten Drehglied (19) des Verteilers fest verbundenes Zentralrad (32) und mindestens ein Umlaufrad (37) umfaßt, das von einem mit dem Ausgangsglied (25) fest verbundenen Quersteg (35) getragen wird, wobei der Servomotor einen ebenfalls koaxialen, mit Flügeln (10) versehenen Rotor (9) aufweist, der mit dem Ausgangsglied (25) verbunden ist und in einem im Gehäuse (4) gebildeten Hohlraum (7) umläuft.

2. Mechanismus nach Anspruch 1, dadurch gekennzeichnet, daß das zweite Drehglied (19) des Verteilers (16) sich in eine axiale Ausnehmung erstreckt, die in dem Ausgangsglied (25) des Mechanismus gebildet ist.

3. Mechanismus nach Anspruch 2, dadurch gekennzeichnet, daß das Laufrad (37) sich in eine radiale Öffnung (33) des Ausgangsgliedes (25) erstreckt, um mit dem Zentralrad (32) zu kämmen, das an dem sich in die Ausnehmung erstreckenden Abschnitt des zweiten Drehgliedes (19) des Verteilers (16) gebildet ist.

4. Mechanismus nach einem der vorhergehenden Ansprüche, bei dem das zweite Drehglied (19) des Verteilers mit einem einen Verteilerrotor umgebenden Verteilerstator verbunden ist, dadurch gekennzeichnet, daß der Verteilerstator teilweise von einer koaxialen Bohrung des mit Flügeln (10) versehenen Rotors (9) aufgenommen wird.

5. Mechanismus nach einem der vorhergehenden Ansprüche, dadurch gekennzeichnet, daß das Umlaufrad (37) in Kämmeingriff mit einem Zahnkranz (38) steht, der an der Innenseite des Gehäuses (1) des Mechanismus gebildet ist.

6. Mechanismus nach Anspruch 5, dadurch gekennzeichnet, daß das Ausgangsglied (25) des Mechanismus in einem Deckel (2) des Gehäuses (1) umläuft.

7. Mechanismus nach einem der vorhergehenden Ansprüche, dadurch gekennzeichnet, daß der Hohlraum (7), in dem der mit Flügeln (10) versehene Rotor (9) umläuft, radiale Trennwände (8) aufweist, die mit der Nabe des Rotors (9) abgedichtet in Berührung stehend zusammenwirken.

8. Mechanismus nach einem der vorhergehenden Ansprüche, dadurch gekennzeichnet, daß die Verzahnungen (32, 37, 38) des Epizykloiden-Getriebes als geradlinige Verzahnungen ausgebildet sind.

**Claims**

1. A fluid actuating servo mechanism comprising, in a casing (4), a hydraulic distributor (16) including a primary rotary member (17) adapted to be connected to a control system, and a secondary rotary member (19) coupled to the primary rotary member by a lost-motion connection, the distributor using said lost-motion for feeding selectively the chambers (14, 15) of at least one double acting fluid servo motor, and a force amplifying transmission between the secondary rotary member (19) and a rotary output member (25) of the mechanism, characterized in that the primary member (17) and the output member (25) are coaxial and in that the force amplifying transmission is comprised of a coaxial epicycloidal gear train (32, 37, 38) including a sun gear (32) fixed to the secondary member (19) of the distributor and at least one planetary gear (37) supported by a transverse arm (35) fixed to the output member (25), the servo motor comprising a coaxial vane (10) rotor (9) connected to the output member and rotating in a cavity (7) formed in the casing (4).

2. Mechanism according to claim 1, characterized in that the secondary member (19) of the distributor (16) extends into an axial recess formed in the output member (25) of the mechanism.

3. Mechanism according to claim 2, characterized in that the planetary gear (37) extends into a radial opening (33) of the output member (25) for engaging the sun gear (32) formed on the portion of the secondary member (19) of the distributor (16) which extends into said recess.

4. Mechanism according to any of the preceding claims, wherein said secondary member (19) of the distributor is connected to a distributor stator surrounding a distributor rotor, characterized in that the distributor stator is partially received in a coaxial bore of the vane (10) rotor (9).

5. Mechanism according to any of the preceding claims, characterized in that the planetary gear (37) is in engagement with a peripherally toothed ring (38) formed on the internal face of the casing (1) of the mechanism.

6. Mechanism according to claim 5, characterized in that the output member (25) of the mechanism rotates in a cover (2) of the casing (1).

7. Mechanism according to any of the preceding claims, characterized in that the cavity (7) wherein the vane (10) rotor (9) rotates comprises radial walls (8) cooperating in fluid-tight contact with the hub of the rotor (9).

8. Mechanism according to any of the preceding claims, characterized in that the gears (32, 37, 38) of the epicycloidal transmission are of the straight-tooth type.

FIG_1

FIG.2

FIG.3